# EUROPÄISCHE PATENTSCHRIFT

(11) **EP 3 924 989 B1**
(45) Veröffentlichungstag und Bekanntmachung des Hinweises auf die Patenterteilung: **27.03.2024**
(21) Anmeldenummer: 19828684.1
(22) Anmeldetag: 17.12.2019
(51) Int. Cl.: G06F 3/02, H01H 13/70

(54) **DRUCKSCHALTERVORRICHTUNG**
PRESSURE SWITCH DEVICE
DISPOSITIF D'INTERRUPTEUR À POUSSOIR

(30) Priorität: 11.02.2019 DE 102019103268
(43) Veröffentlichungstag der Anmeldung: 22.12.2021
(73) Patentinhaber: HAT-tec GmbH, 75217 Birkenfeld (DE)
(72) Erfinder: HAUG, Thomas, 75217 Birkenfeld (DE)
(74) Vertreter: Wacker, Jost Oliver
(86) Internationale Anmeldenummer: PCT/EP2019/085653
(87) Internationale Veröffentlichungsnummer: WO 2020/164782

(56) Entgegenhaltungen:
- EP-A1- 1 768 146
- AU-A- 6 754 581
- DE-U1- 29 514 655
- JP-U- H 078 926
- JP-U- S55 180 227

## Beschreibung

Die Erfindung betrifft eine Druckschaltervorrichtung für ein elektronisches Gerät beziehungsweise für eine Eingabeschnittstelle oder Tastatur eines elektronischen Gerätes nach dem Oberbegriff des Anspruchs 1. Ferner betrifft die Erfindung ein Verfahren zur Herstellung beziehungsweise Montage einer solchen Druckschaltervorrichtung. Die Druckschaltervorrichtung weist dabei wenigstens einen an einer Leiterplatte vorgesehenen Kontaktbereich und ein am Kontaktbereich zwischen einer Offenstellung und einer Kontaktstellung verstellbares Kontaktelement zur Herstellung eines Schaltkontaktes auf. Zudem ist ein elastisch verformbares Betätigungselement vorgesehen, mittels dem das Kontaktelement von der Offenstellung in die Kontaktstellung verlagerbar ist. Ferner weist die Druckschaltervorrichtung eine an der Leiterplatte vorgesehene Lagerplatte mit wenigstens einer Ausnehmung auf, die zusammen mit der Leiterplatte eine Aufnahme für das Kontaktelement und das Betätigungselement bildet. Die Leiterplatte bildet hierbei einen Aufnahmeboden und die Lagerplatte eine Seitenbegrenzung der Aufnahme.

Aus DE602004011111T2 ist eine Druckschaltervorrichtung bekannt, bei der ein domförmiger elastischer Knopf mit einem Kontaktelement vorgesehen ist, das durch Verformen des Knopfes von einer Offenstellung in eine Kontaktstellung zum Schließen eines elektrischen Schaltkreises verstellbar ist. Hierzu kann der elastische Knopf in einer passend geformten Ausnehmung einer Platte angeordnet sein. In die Ausnehmung ist dabei eine Nut eingelassen, die zur Aufnahme einer Rippe dient, die an der Oberseite eines Standfußes des Knopfes ausgebildet ist. Die Beaufschlagung des Knopfes erfolgt über einen mit einer Drucktaste verbundenen Stößel, der in der Ausnehmung der Platte geführt ist.

Nachteilig an der bekannten Druckschaltervorrichtung ist, dass die gleichzeitig zur Festlegung des Standfußes und zur Führung des Stößels dienende Ausnehmung eine relativ komplexe Form aufweist. Insbesondere bei integraler Ausbildung innerhalb einer Lagerplatte ist die Herstellung dieser Ausnehmung daher relativ aufwändig und nur mit Hilfe spezieller Formwerkzeuge möglich. Hierdurch und wegen der benötigten Drucktaste mit Stößel sind die Herstellungskosten der Druckschaltervorrichtung zudem relativ hoch.

EP 1768146 A1 offenbart eine Tastatureinheit für Smartphones, bei der die Tasten an domförmigen Erhebungen einer Gummimatte angeklebt sind. In die Gummimatte ist dabei eine Verstärkungsplatte integriert, die unterhalb der Tasten jeweils ein Loch aufweist, durch das jeweils ein Betätigungsabschnitt der Gummimatte ragt. Der Betätigungsabschnitt dient wiederum zur Bedienung eines Schalters einer Leiterplatte auf der die Gummimatte aufliegt.

JP S55180227 U zeigt eine Matte aus elastisch verformbarem Material, die mehrere Betätigungselemente ausformt. Die Beaufschlagung der Betätigungselemente erfolgt dabei über eine oben aufliegende Schicht, wobei jedes Betätigungselement an der von dieser Schicht abgewandten Unterseite Kontaktelemente zur Betätigung eines Schalters aufweist, der an einer Leiterplatte vorgesehen ist. Das elastisch verformbare Material liegt dabei an einer Klemmplatte an und ist im Übrigen beabstandet zur Leiterplatte gehalten.

Die Aufgabe der Erfindung ist es, bei einer gattungsgemäßen Schaltervorrichtung die genannten Nachteile zu vermeiden und eine flexible und kostengünstige Herstellung zu ermöglichen.

Diese Aufgabe wird durch eine Druckschaltervorrichtung mit den Merkmalen des Anspruchs 1 gelöst. Dabei ist an einer von der Leiterplatte abgewandten Oberseite der Lagerplatte eine Sicherungsschicht vorgesehen. Diese bildet einerseits eine Bedienungsoberfläche und verschließt gleichzeitig die Aufnahme der Lagerplatte wenigstens teilweise. Dabei bildet das Betätigungselement einen Befestigungsbereich aus, der sich selbst direkt oder in Verbindung mit einer jeweiligen Klebeschicht von der Leiterplatte bis zur Sicherungsschicht erstreckt und dadurch sowohl von der Leiterplatte als auch von der Sicherungsschicht abgestützt wird. Durch diese vollständige Erstreckung des Befestigungsbereichs über die Dicke der Lagerplatte kann das Betätigungselement zwischen der Leiterplatte und der Sicherungsschicht formschlüssig festgelegt werden. Die als Seitenbegrenzung fungierende Lagerplatte dient zudem zur umlaufenden seitlichen Abstützung des Betätigungselementes, so dass dieses im Wesentlichen vollständig in seiner Position gegenüber der Leiterplatte fixiert ist. Die Anordnung bietet dabei eine besonders einfache Anpassung der Lagerplatte beziehungsweise der darin eingelassenen Lagerausnehmungen. Ferner wird hierdurch eine besonders einfache Montage insbesondere mehrerer Betätigungselemente ermöglicht, die einzeln in die vorgefertigten und an die Leiterplatte angepassten Lagerausnehmungen der Lagerplatte eingesetzt und dabei über dem jeweiligen Kontaktelement angeordnet werden. Anschließend können die Betätigungselemente dann mittels einer gemeinsamen Sicherungsschicht gesichert werden. Die Sicherungsschicht kann dabei durch eine einzelne Schicht, wie beispielsweise eine Folie, oder durch einen aus wenigstens zwei Schichten bestehenden Schichtverbund gebildet sein, der beispielsweise wenigstens zwei Schichten aus einer Haftschicht, einer Tragschicht, einer Beschriftungsschicht und/oder einer Schutzschicht umfasst. Wenigstens eine Schicht kann dabei zudem aus einem plattenförmigen Material gebildet sein.

In einer besonders vorteilhaften Ausführungsform ist das elastisch verformbare Betätigungselement durch einen domförmigen Druckknopf gebildet, um weitestgehend gleichmäßig von allen Seiten und wiederkehrend gleichmäßig durch Druckbeaufschlagung verformt werden zu können. Zudem kann durch die Verwendung des domförmigen Druccknopfes die zur Betätigung des Kontaktelementes benötigte Druckkraft relativ genau eingestellt werden.

Dabei ist es günstig, wenn das Betätigungselement einen zentralen Betätigungsbereich aufweist, der über die Bedienungsoberfläche hinausragt. Hierdurch ist das verformbare Betätigungselement selbst besonders gut ertastbar und zur Anlage eines Fingers geeignet, so dass auf eine zusätzliche Drucktaste verzichtet werden kann.

Vorteilhafterweise ist die Seitenbegrenzung der Aufnahme beziehungsweise die Ausnehmung in der Lagerplatte zylindrisch ausgebildet. Auf diese Weise kann die Lagerplatte besonders einfach an die jeweilige Leiterplatte angepasst werden, wie beispielsweise durch Einarbeitung der Lagerausnehmungen in Form von Bohrungen.

Zudem ist es günstig, wenn das Betätigungselement einen als Befestigungsbereich dienenden umlaufenden Fußabschnitt ausformt, der bodenseitig an der Leiterplatte und oberseitig an der Sicherungsschicht anliegt und seitlich benachbart zur Seitenbegrenzung der Lagerplatte angeordnet ist beziehungsweise an diese anlegbar ist. Auf diese Weise kann der Fußabschnitt derart geformt und dimensioniert werden, um ein zu allen Seiten sicheres Abstützen des Betätigungselementes zu gewährleisten, während das übrige Betätigungselement im Wesentlichen unabhängig vom Befestigungsbereich mit einer geeigneten elastischen Verformbarkeit versehen werden kann.

Vorteilhafterweise ist der zentrale Betätigungsbereich dabei über einen umlaufenden Verformungsbereich mit dem Fußabschnitt verbunden, wobei der Betätigungsbereich, der Verformungsbereich und der Fußabschnitt einteilig aus einem homogenen Elastomermaterial, wie insbesondere Gummi, hergestellt sind. Hierdurch ist eine kostengünstige Herstellung und einfache Montage des Betätigungselementes und der Druckschaltervorrichtung insgesamt möglich.

Ferner ist es günstig, wenn das Kontaktelement durch einen mittels des Betätigungselementes mit einer Stellkraft beaufschlagbaren, domförmigen Kontaktschalter gebildet ist. Auf diese Weise kann bei Erreichen eines Schwellenwertes der auf das Betätigungselement aufzubringenden Druckkraft ein sicheres Schließen des Schaltkreises durch den domförmigen Kontaktschalter gewährleistet werden.

Vorteilhafterweise ist das Betätigungselement im zentralen Betätigungsbereich zudem leitfähig ausgebildet, wie beispielsweise durch darin aufgenommene leitfähige Mittel oder durch ein zumindest bereichsweise verwendetes leitfähiges Elastomermaterial.

In einer weiteren vorteilhaften Ausführungsform sind im Betätigungsbereich oder Verformungsbereich Wegbegrenzungsmittel für die Begrenzung der Verformung des Betätigungselementes in Richtung der Leiterplatte vorgesehen, durch die eine Überbeanspruchung des Kontaktelementes oder eine Beschädigung der Leiterplatte vermieden werden kann.

Dabei ist es günstig, wenn die Wegbegrenzungsmittel eine von der Innenseite des Betätigungsbereichs oder Verformungsbereichs abstehende Stützeinrichtung aufweisen, die um das Kontaktelement herum umlaufend an die Leiterplatte anlegbar ist. Hierdurch kann das Betätigungselement bei Erreichen einer vorgesehenen maximalen Verformung schonen an der Leiterplatte abgestützt werden, um eine weitergehende Verformung des Kontaktelementes zu blockieren.

Dabei ist es in jedem Fall günstig, wenn die Wegbegrenzungsmittel einteilig mit dem übrigen Betätigungselement ausgebildet sind, um ein sicheres Abstützen und eine kostengünstige Herstellung derselben zu gewährleisten.

In einer weiteren vorteilhaften Ausführungsform ist die Sicherungsschicht durch eine Folie oder einen Folienverbund gebildet, um eine besonders vielseitige und einfach anzupassende Oberflächengestaltung der Druckschaltervorrichtung zu ermöglichen.

In einer besonders vorteilhaften Ausführungsform ist die Lagerplatte durch Acrylglas gebildet, wodurch die zur Herstellung der Aufnahme dienende Ausnehmung besonders einfach eingearbeitet werden kann.

Ferner wird die oben genannte Aufgabe durch ein elektronisches Gerät beziehungsweise durch eine Eingabeschnittstelle eines elektronischen Gerätes mit wenigstens einer Druckschaltervorrichtung nach einer der oben beschriebenen Ausführungsformen gelöst, wobei die Lagerplatte zusammen mit der Leiterplatte wenigstens zwei Aufnahmen mit jeweils einem darin befestigten elastisch verformbaren Betätigungselement aufweist.

Darüber hinaus wird die oben genannte Aufgabe durch ein Verfahren zur Herstellung einer Druckschaltervorrichtung in einer der oben beschriebenen Ausführungsformen gelöst, wobei in einem ersten Schritt die Lagerplatte derart an der Leiterplatte befestigt wird, dass die wenigstens eine Lagerausnehmung den wenigstens einen Kontaktbereich der Leiterplatte freigibt. In einem zweiten Schritt werden dann das Kontaktelement und das Betätigungselement entweder nacheinander oder zusammen in die durch die Lagerausnehmung der Lagerplatte und die Leiterplatte gebildete Aufnahme eingesetzt. In einem dritten Schritt wird die Aufnahme dann mit dem darin eingesetzten Kontaktelement und Betätigungselement mittels der Sicherungsschicht wenigstens zum Teil verschlossen. Hierbei kann die Lagerplatte mit den daran vorgesehenen Lagerausnehmungen besonders einfach hergestellt und auch noch nachträglich an eine bestimmte Leiterplatte angepasste werden. Zudem ist auf diese Weise eine besonders einfache Teilmontage und Fixierung des Kontaktelementes und des Betätigungselementes möglich. Insgesamt wird hierdurch eine flexible Anpassung der Druckschaltervorrichtung beziehungsweise der betreffenden Eingabeschnittstelle an eine bestimmte Leiterplatte sowie eine exakte und kostengünstige Herstellung ermöglicht.

Dabei ist es günstig, wenn im ersten Schritt zwischen Leiterplatte und Lagerplatte eine Klebeschicht vorgesehen wird, die sich in die Aufnahme hineinerstreckt und der Befestigungsbereich des Betätigungselementes bodenseitig im zweiten Schritt an der Klebeschicht festgelegt wird. Durch diese frühzeitige Fixierung des Betätigungselementes mit dem darin aufgenommenen Kontaktelement wird die Montage zusätzlich erleichtert und eine besonders stabile und spielfreie Befestigung des Betätigungselementes an der Leiterplatte gewährleistet.

Zudem wird vorteilhafterweise nach dem zweiten Schritt zwischen der Lagerplatte und der Sicherungsschicht eine zweite Klebeschicht vorgesehen, die sich in die Aufnahme hineinerstreckt und der Befestigungsbereich des Betätigungselementes im dritten Schritt oberseitig an der zweiten Klebeschicht befestigt wird. Hierdurch wird eine besonders stabile und spielfreie Festlegung des Befestigungsbereichs an der Sicherungsschicht gewährleistet.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Explosionsdarstellung einer Eingabeschnittstelle eines elektronischen Gerätes,
- Figur 2: eine geschnittene Ansicht einer Druckschaltervorrichtung der Eingabeschnittstelle nach Figur 1 und
- Figur 3: eine geschnittene Ansicht einer alternativen Ausführungsform der Druckschaltervorrichtung mit einer Stützeinrichtung.

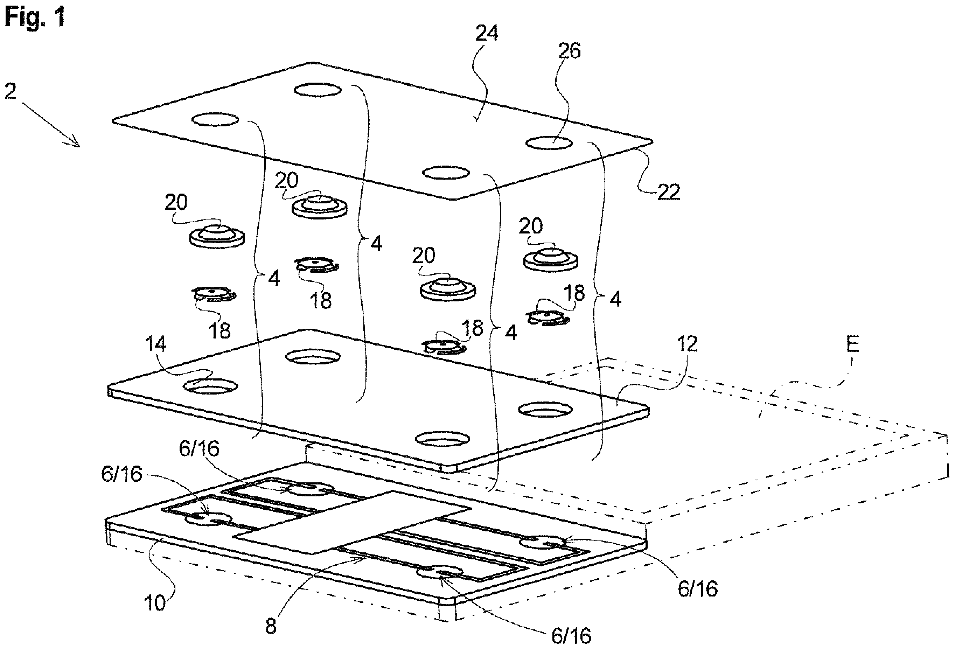

Fig. 1 zeigt eine Eingabeschnittstelle 2 beziehungsweise eine Tastatur eines beliebigen elektronischen Gerätes E mit mehreren Druckknopfvorrichtungen 4, die jeweils an einem Kontaktbereich 6 angeordnet sind, der mittels einer Leiterbahn 8 auf einer Leiterplatte 10 ausgebildet ist.

Zur Ausbildung der Druckknopfvorrichtungen 4 ist dabei neben der Leiterplatte 10 eine Lagerplatte 12 mit mehreren zylindrischen Lagerausnehmungen 14 vorgesehen. Ferner ist zur Ausbildung eines Schaltkontaktes 16 an den Kontaktbereichen 6 jeweils ein Kontaktelement 18 vorgesehen, das beispielsweise domförmig ausgebildet und durch Druckbeaufschlagung zwischen einer Offenstellung und einer Kontaktstellung verstellbar ist. Zur Druckbeaufschlagung dieser Kontaktelemente 18 ist über diesen zudem jeweils ein elastisch verformbares Betätigungselement 20 in Form eines domförmigen Druckknopfes angeordnet, das beispielsweise aus Gummi hergestellt ist. Ferner wird eine Sicherungsschicht 22 verwendet, die eine Bedienungsoberfläche 24 der Eingabeschnittstelle des elektronischen Gerätes 2 bildet.

Die Lagerplatte 12 ist beispielsweise durch ein starres Material, wie insbesondere einen Kunststoff wie Acrylglas gebildet, in das die Lagerausnehmungen 14 direkt bei Herstellung der Lagerplatte 12 oder nachträglich in der Weise eingelassen sind, dass sie jeweils einem der benötigten Kontaktbereiche 6 an der Leiterplatte 10 zugeordnet sind.

Die Sicherungsschicht 22 ist beispielhaft als Folie oder Folienverbund dargestellt. Alternativ oder zusätzlich hierzu kann die Sicherungsschicht 22 auch aus einer beliebig starren Platte hergestellt sein beziehungsweise eine solche aufweisen. Zudem kann die Sicherungsschicht 22 eine an der Bedienungsoberfläche 24 einsehbare Bedruckung aufweisen (nicht dargestellt).

Wie aus Figur 1 ferner zu entnehmen ist, weist die Sicherungsschicht 22 beispielhaft mehrere Betätigungsbereiche 26 auf, die jeweils einem der Betätigungselemente 20 zugeordnet sind. Die Betätigungsbereiche 26 können dabei, wie dargestellt, durch Durchgangsöffnungen gebildet sein, die in die Sicherungsschicht 22 eingelassen sind. Alternativ hierzu kann die Sicherungsschicht auch geschlossen ausgebildet sein, wobei sie zumindest in den Betätigungsbereichen 26 flexible Materialeigenschaften aufweist.

Die Lagerausnehmungen 14, die Kontaktelemente 18, die Betätigungselemente 20 und die Betätigungsbereiche 26 sind in Figur 1 beispielhaft mit einem kreisförmigen Grundriss dargestellt. Alternativ oder zusätzlich hierzu können diese insgesamt oder teilweise auch jede andere Form, wie beispielsweise eine mehreckige und insbesondere viereckige Form aufweisen. Die kreisförmige Grundform hat allerdings den Vorteil, dass insbesondere die als Durchtrittsöffnungen ausgebildeten Betätigungsbereiche 26 und die Lagerausnehmungen 14 besonders einfach und beispielsweise auch nachträglich hergestellt werden können, wie insbesondere durch Bohrungen.

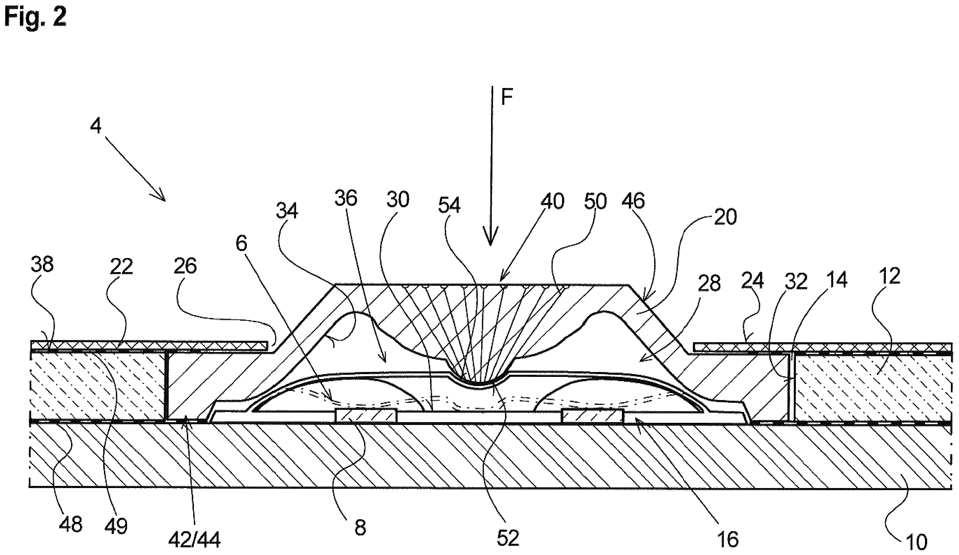

Gemäß der in Figur 2 dargestellten einzelnen Druckknopfvorrichtung 4, ist die Lagerplatte 12 derart an der Leiterplatte 10 angebracht, dass die jeweilige Lagerausnehmung 14 den benötigten Kontaktbereich 6 freigibt. Auf diese Weise bilden die Lagerausnehmungen 14 der Lagerplatte 12 zusammen mit der Leiterplatte 10 jeweils eine Aufnahme 28, wobei die Leiterplatte 10 einen Aufnahmeboden 30 und die Lagerplatte 12 eine Seitenbegrenzung 32 der Aufnahme 28 bildet, die beispielhaft zylindrisch ausgebildet ist.

In die Aufnahme 28 ist das Kontaktelement 18 derart eingesetzt, dass es auf der Leiterplatte 10 aufliegt und dabei zusammen mit dem jeweiligen Kontaktbereich 6 den Schaltkontakt 16 bildet. Dieser ist im dargestellten unbetätigten Zustand des Kontaktelementes 18 in der Offenstellung und kann durch Druckbeaufschlagung des Kontaktelementes 18 mit einer Stellkraft F in die Kontaktstellung verbracht werden, in der an der Leiterbahn 8 ein elektrischer/elektronischer Kontakt hergestellt wird.

Ferner ist in die Aufnahme 28 das Betätigungselement 20 derart eingesetzt, dass es sich ebenfalls an der Leiterplatte 10 abstützt und dabei über das Kontaktelement 18 gestülpt ist, um dieses in einem durch eine Innenseite 34 begrenzten Innenraum 36 aufzunehmen beziehungsweise festzulegen. Die Beaufschlagung des Kontaktelementes 18 mit der Stellkraft F erfolgt daher über das elastische Betätigungselement 20.

An einer von der Leiterplatte 10 abgewandten Oberseite 38 der Lagerplatte 12 ist zudem die Sicherungsschicht 22 derart angebracht, dass sie die durch die Lagerausnehmung 14 und die Leiterplatte 10 gebildete Aufnahme 28 zu der von der Leiterplatte 10 abgewandten Seite hin wenigstens teilweise verschließt. Dabei sind die als Durchtrittsöffnungen ausgebildeten Betätigungsbereiche 26 derart dimensioniert und angeordnet, dass ein zentraler Betätigungsbereich 40 des Betätigungselementes 20 durch den Betätigungsbereich 26 der Sicherungsschicht 22 hindurch über die Bedienungsoberfläche 24 hinaus ragt und dadurch besonders gut ertastet und mit der Stellkraft F beaufschlagt werden kann.

Das elastische Betätigungselement 20 weist zudem einen Befestigungsbereich 42 auf, der sich über die gesamte Höhe der Lagerplatte 12 zwischen Leiterplatte 10 und Sicherungsschicht 22 erstreckt und sich an beiden Elementen abstützt. Hierdurch und durch die Seitenbegrenzung 32 der Lagerplatte 10 ist das Betätigungselement 20 über den Befestigungsbereich 42 vollständig in der Aufnahme 28 festgelegt.

Der Befestigungsbereich 42 ist dabei beispielhaft durch einen umlaufenden Fußabschnitt 44 des Betätigungselementes 20 gebildet, mit dem sich das elastische Betätigungselement 20 an der Leiterplatte 10 abstützt und das über einen umlaufenden Verformungsbereich 46 mit dem zentralen Betätigungsbereich 40 verbunden ist. Der Fußabschnitt 44, der Verformungsbereich 46 und der zentrale Betätigungsbereich 40 des Betätigungselementes 20 sind dabei einteilig aus einem homogenen Elastomermaterial, wie insbesondere Gummi gebildet.

Wie aus Fig. 2 ferner zu entnehmen ist, ist die Lagerplatte 12 über eine Klebeschicht 48 an der Leiterplatte 10 angebracht, die durch einen auf die Leiterplatte 10 und/oder die Lagerplatte 12 aufgetragenen Kleber oder durch eine beidseitig klebende Klebefolie gebildet ist. Die Klebeschicht 48 kann dabei, wie dargestellt, derart ausgebildet sein, dass sie in die Aufnahme 28 hineinreicht, so dass beim Einsetzen des Betätigungselementes 20 in die Aufnahme 28, dessen Fußabschnitt 44 über die Klebeschicht 48 an der Leiterplatte 10 festgelegt wird.

In gleicher Weise kann auch zwischen der Oberseite 38 der Lagerplatte 12 und der Sicherungsschicht 22 eine Klebeschicht 49 zur Verbindung beider Elemente vorgesehen sein, die sich ebenfalls bis in die Aufnahme 28 erstreckt. Hierdurch kann der Befestigungsbereich 42 an seiner von der Leiterplatte 10 abgewandten Seite mittels der zweiten Klebeschicht 49 zusätzlich an der Sicherungsschicht 22 festgelegt sein. Alternativ hierzu kann wenigsten eine der Klebeschichten 48, 49 auch lediglich im Bereich der Lagerplatte 12 vorgesehen sein, so dass sich der Befestigungsbereich 42 in diesem Fall an der Leiterplatte 10 beziehungsweise der Sicherungsschicht 22 lediglich abstützt.

Ferner können in den zentralen Betätigungsbereich 40 des Betätigungselementes 20 elektrisch leitfähige Elemente 50 eingebettet sein oder das Betätigungselement 20 kann zumindest im zentralen Betätigungsbereich 40 durch ein leitfähiges Elastomermaterial gebildet sein. Hierdurch kann eine Berührungsempfindlichkeit des Betätigungselementes 20 zur Verfügung gestellt werden, die alternativ oder zusätzlich zur Betätigung des Kontaktelementes 18 durch die Stellkraft F einen Schaltvorgang an der Leiterplatte 10 durch bloße Berührung des Betätigungselementes 20 auslösen kann. Beispielsweise kann dabei ein erster Schaltvorgang durch bloße Anlage eines Fingers am Betätigungselement 20 und ein zweiter Schaltvorgang durch Umschalten des Kontaktelementes in die Schließstellung mittels Aufbringen der Stellkraft F ausgelöst werden.

An der Innenseite 34 des zentralen Betätigungsbereichs 40 ragt zudem eine Führungskontur 52 in den Innenraum 36, die im dargestellten montierten Zustand der Druckknopfvorrichtung 4 in eine Führungsgegenkontur 54 des Kontaktelementes 18 greift. Auf diese Weise greifen das Kontaktelement 18 und das Betätigungselement 20 formschlüssig ineinander und sind während der Beaufschlagung mit der Stellkraft F gegenseitig aneinander geführt.

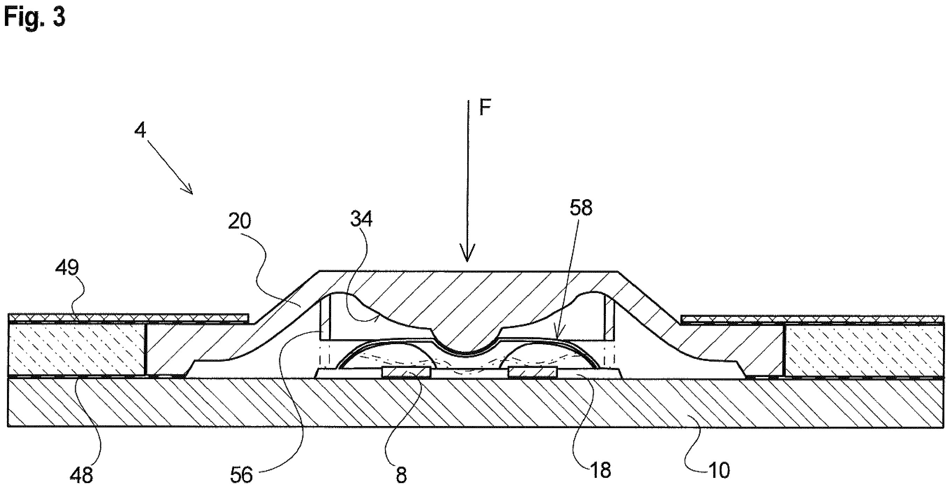

Figur 3 zeigt eine alternative Ausführungsform der Druckknopfvorrichtung 4, bei der an der Innenseite 34 des Betätigungselementes 20 zusätzlich eine Stützeinrichtung 56 vorgesehen ist, die bei der Beaufschlagung des Betätigungselementes 20 mit der Stellkraft F an einem flachen Randbereich des Kontaktelementes 18 oder direkt an der Leiterplatte 10 aufgesetzt werden kann. Dadurch wirkt die Stützeinrichtung 56 als Wegbegrenzungsmittel des Betätigungselementes 20, durch das eine übermäßige Verformung und Beschädigung sowohl eines verformbaren Teils 58 des Kontaktelementes 18 als auch des Betätigungselementes 20 selbst vermieden werden kann. Die Stützeinrichtung 56 ist hierzu vorzugsweise einteilig mit dem übrigen Betätigungselement 20 ausgeführt und erstreckt sich dabei beispielsweise derart, dass sie sich zumindest um den verformbaren Teil 58 des Kontaktelementes 18 herum umlaufend, wie dargestellt, an dessen Randbereich oder an der Leiterplatte 10 abstützen kann.

Unabhängig von der jeweiligen Ausführungsform erfolgt die Montage der Druckknopfvorrichtung 4 vorzugsweise so, dass zunächst die Lagerplatte 12 mittels der Klebeschicht 48 an der Leiterplatte 10 derart befestigt wird, dass die Lagerausnehmungen 14 an den Kontaktbereichen 6 angeordnet sind. Die Klebeschicht 48 erstreckt sich dabei, wie zu Figur 2 beschrieben, am Aufnahmeboden 30 etwas in die Aufnahme 28 hinein. Im nächsten Schritt wird das jeweilige Kontaktelement 18 am Kontaktbereich 6 positioniert und gegebenenfalls an der Leiterplatte 10 fixiert sowie das Betätigungselement 20 über das Kontaktelement 18 gestülpt. Alternativ hierzu kann das Kontaktelement 18 bereits vorab in den Innenraum 36 des Betätigungselementes 20 eingesetzt sein, so dass beide gemeinsam in die Aufnahme 28 eingesetzt werden können.

In jedem Fall wird das Betätigungselement 20 derart in die Aufnahme 28 eingesetzt, dass sich sein Fußabschnitt 44 direkt oder über die Klebeschicht 48 an der Leiterplatte 10 abstützt. Durch die Seitenbegrenzung 32 der Lagerplatte 12 und die sich optional in die Aufnahme 28 erstreckende Klebeschicht 48 wird das Betätigungselement 20 dabei zusätzlich in seiner Position gehalten.

Im nächsten Schritt wird die Sicherungsschicht 22 an der Oberseite 38 der Lagerplatte 12 beispielsweise mittels der Klebeschicht 49 derart festgelegt, dass die Aufnahme 28 auch an ihrer von der Leiterplatte 10 abgewandten Seite teilweise verschlossen wird. Dadurch wird der durch den Fußabschnitt 44 gebildete Befestigungsbereich 42 von der Sicherungsschicht 22 auch in diese Richtung abgestützt und das Betätigungselement 20 ist somit in alle Richtungen festgelegt. Durch die sich optional in die Aufnahme 28 erstreckenden Klebeschicht 48 kann der Befestigungsbereich 42 des Betätigungselementes 20 dabei spielfrei festgelegt werden.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist. Die Erfindung wird aber in den Ansprüchen definiert.

## Patentansprüche

1. Druckschaltervorrichtung (2) für ein elektronisches Gerät (E)
mit wenigstens einem an einer Leiterplatte (10) vorgesehenen Kontaktbereich (6),
einem am Kontaktbereich (6) zwischen einer Offenstellung und einer Kontaktstellung verstellbaren Kontaktelement (18),
einem elastisch verformbaren Betätigungselement (20), mittels dem das Kontaktelement (18) von der Offenstellung in die Kontaktstellung verlagerbar ist, und
einer an der Leiterplatte (10) vorgesehenen Lagerplatte (12) mit wenigstens einer Lagerausnehmung (14), die zusammen mit der Leiterplatte (10) eine Aufnahme (28) für das Kontaktelement (18) und das einzeln eingesetzte Betätigungselement (20) bildet, wobei die Leiterplatte (10) einen Aufnahmeboden (30) und die Lagerplatte (12) eine Seitenbegrenzung (32) der Aufnahme (28) bildet,
**dadurch gekennzeichnet, dass** an einer von der Leiterplatte (10) abgewandten Oberseite (38) der Lagerplatte (12) eine Sicherungsschicht (22) vorgesehen ist, die eine Bedienungsoberfläche (24) bildet und die die Aufnahme (28) wenigstens teilweise verschließt, wobei das Betätigungselement (20) einen Befestigungsbereich (42) aufweist, der von der Leiterplatte (10) und der Sicherungsschicht (22) abgestützt ist und dabei zwischen der Leiterplatte (10) und der Sicherungsschicht (22) formschlüssig festgelegt ist.

2. Druckschaltervorrichtung nach Anspruch 1, **dadurch gekennzeichnet, dass** das elastisch verformbare Betätigungselement (20) durch einen domförmigen Druccknopf gebildet ist.

3. Druckschaltervorrichtung nach Anspruch 1 oder 2, **dadurch gekennzeichnet, dass** das Betätigungselement (20) einen zentralen Betätigungsbereich (40) aufweist, der über die Bedienungsoberfläche (24) hinausragt.

4. Druckschaltervorrichtung nach einem der Ansprüche 1 bis 3, **dadurch gekennzeichnet, dass** die Seitenbegrenzung (32) der Aufnahme (28) zylindrisch ausgebildet ist.

5. Druckschaltervorrichtung nach einem der Ansprüche 1 bis 4, **dadurch gekennzeichnet, dass** das Betätigungselement (20) einen als Befestigungsbereich (42) dienenden umlaufenden Fußabschnitt (44) ausformt, der bodenseitig an der Leiterplatte (10) und oberseitig an der Sicherungsschicht (22) abgestützt sowie seitlich benachbart zur Seitenbegrenzung (32) der Lagerplatte (12) angeordnet ist.

6. Druckschaltervorrichtung nach mindestens Ansprüchen 3 und 5, **dadurch gekennzeichnet, dass** der zentrale Betätigungsbereich (40) über einen umlaufenden Verformungsbereich (46) mit dem Fußabschnitt (44) verbunden ist, wobei der Betätigungsbereich (40), der Verformungsbereich (46) und der Fußabschnitt (44) einteilig aus einem homogenen Elastomermaterial hergestellt sind.

7. Druckschaltervorrichtung nach einem der Ansprüche 1 bis 6, **dadurch gekennzeichnet, dass** das Kontaktelement (18) durch einen mittels des Betätigungselementes (20) mit einer Stellkraft (F) beaufschlagbaren, domförmigen Kontaktschalter gebildet ist.

8. Druckschaltervorrichtung nach mindestens Anspruch 3, **dadurch gekennzeichnet, dass** das Betätigungselement (20) im zentralen Betätigungsbereich (40) leitfähig ausgebildet ist.

9. Druckschaltervorrichtung nach Ansprüchen 3 und 7 oder nach Anspruch 8 **dadurch gekennzeichnet, dass**
das Betätigungselement (20) an einer Innenseite (34) des zentralen Betätigungsbereichs (40) eine Führungskontur (52) aufweist, die an eine Führungsgegenkontur (54) des Kontaktelementes (18) anlegbar ist.

10. Druckschaltervorrichtung nach einem der Ansprüche 7 bis 9 in Kombination mit Anspruch 3 oder 6 **dadurch gekennzeichnet, dass** im Betätigungsbereich (40) oder Verformungsbereich (46) Wegbegrenzungsmittel für die Begrenzung der Verformung des Betätigungselementes (20) in Richtung der Leiterplatte (10) vorgesehen sind.

11. Druckschaltervorrichtung nach Anspruch 10, **dadurch gekennzeichnet, dass** die Wegbegrenzungsmittel eine von der Innenseite (34) des Betätigungsbereichs (40) oder Verformungsbereichs (46) abstehende Stützeinrichtung (56) aufweisen, die um das Kontaktelement (18) herum umlaufend an die Leiterplatte (10) anlegbar ist.

12. Druckschaltervorrichtung nach Anspruch 10 oder 11, **dadurch gekennzeichnet, dass** die Wegbegrenzungsmittel einteilig mit dem übrigen Betätigungselement (20) ausgebildet sind.

13. Druckschaltervorrichtung nach einem der Ansprüche 1 bis 12, **dadurch gekennzeichnet, dass** die Sicherungsschicht (22) durch eine Folie oder einen Folienverbund gebildet ist.

14. Druckschaltervorrichtung nach einem der Ansprüche 1 bis 13, **dadurch gekennzeichnet, dass** die Lagerplatte (12) durch Acrylglas gebildet ist.

15. Elektronisches Gerät mit einer Druckschaltervorrichtung nach einem der Ansprüche 1 bis 13, **dadurch gekennzeichnet, dass** die Lagerplatte (12) zusammen mit der Leiterplatte (10) wenigstens zwei Aufnahmen (28) mit jeweils einem darin befestigten elastisch verformbaren Betätigungselement (20) aufweist.

16. Verfahren zur Herstellung einer Druckschaltervorrichtung nach einem der Ansprüche 1 bis 14, **dadurch gekennzeichnet, dass**
in einem ersten Schritt die Lagerplatte (12) derart an der Leiterplatte (10) befestigt wird, dass die wenigstens eine Lagerausnehmung (14) den wenigstens einen Kontaktbereich (6) der Leiterplatte (10) freigibt,
in einem zweiten Schritt das Kontaktelement (18) und das Betätigungselement (20) in die durch die Lagerausnehmung (14) der Lagerplatte (12) und die Leiterplatte (10) gebildete Aufnahme (28) eingesetzt werden und
in einem dritten Schritt die Aufnahme (28) mit dem darin eingesetzten Kontaktelement (18) und Betätigungselement (20) mittels der Sicherungsschicht (22) wenigstens teilweise verschlossen wird.

17. Verfahren nach Anspruch 16, **dadurch gekennzeichnet, dass** im ersten Schritt zwischen Leiterplatte (10) und Lagerplatte (12) eine Klebeschicht (48) vorgesehen wird, die sich in die Aufnahme (28) hineinerstreckt und der Befestigungsbereich (42) des Betätigungselementes (20) bodenseitig im zweiten Schritt an der Klebeschicht (48) befestigt wird.

18. Verfahren nach Anspruch 17, **dadurch gekennzeichnet, dass** nach dem zweiten Schritt zwischen der Lagerplatte (12) und der Sicherungsschicht (22) eine zweite Klebeschicht (49) vorgesehen wird, die sich in die Aufnahme (28) hineinerstreckt und der Befestigungsbereich (42) des Betätigungselementes (20) im dritten Schritt oberseitig an der zweiten Klebeschicht (49) befestigt wird.

## Claims

1. A pressure switch device (2) for an electronic device (E)
having at least one contact region (6) provided on a printed circuit board (10),
a contact element (18) movable between an open position and a contact position on the contact region (6),
an elastically deformable actuation element (20), by means of which the contact element (18) is displaceable from the open position to the contact position, and
a bearing plate (12) provided on the printed circuit board (10) with at least one bearing recess (14), which together with the printed circuit board (10) forms a receptacle (28) for the contact element (18) and the individually inserted actuation element (20), wherein the printed circuit board (10) forms a receptacle base (30) and the bearing plate (12) forms a side boundary (32) of the receptacle (28),
**characterised in thaton** an upper face (38) of the bearing plate (12) facing away from the printed circuit board (10) a securing layer (22) is provided which forms a user interface (24) and at least partially closes off the receptacle (28), wherein the actuation element (20) has a fastening region (42) which is supported by the printed circuit board (10) and the securing layer (22) and is secured in a form-fitting manner between the printed circuit board (10) and the securing layer (22).

2. The pressure switch device according to claim 1, **characterised in that** the elastically deformable actuation element (20) is formed by a dome-shaped push button.

3. The pressure switch device according to claim 1 or 2, **characterised in that** the actuation element (20) has a central actuating region (40) which projects beyond the user interface (24).

4. The pressure switch device according to any one of claims 1 to 3, **characterised in that** the side boundary (32) of the receptacle (28) is configured to be cylindrical.

5. The pressure switch device according to any one of claims 1 to 4, **characterised in that** the actuation element (20) forms a circumferential foot section (44) acting as a fastening region (42), which foot section is supported on the base side on the printed circuit board (10) and on the upper side on the securing layer (22) and is arranged laterally adjacent to the side boundary (32) of the bearing plate (12).

6. The pressure switch device according to at least claims 3 to 5, **characterised in that** the central actuating region (40) is joined to the foot section (44) by a circumferential deformation region (46), wherein the actuating region (40), the deformation region (46) and the foot section (44) are produced in one piece from a homogeneous elastomer material.

7. The pressure switch device according to any one of claims 1 to 6, **characterised in that** the contact element (18) is formed by a dome-shaped contact switch which can be subjected to an actuating force (F) by means of the actuation element (20).

8. The pressure switch device according to at least claim 3, **characterised in that** the actuation element (20) is configured to be conductive in the central actuating region (40).

9. The pressure switch device according to claims 3 and 7 or according to claim 8, **characterised in that** the actuation element (20) has a guiding contour (52) on an inner side (34) of the central actuating region (40), which guiding contour can be placed against a counter guiding contour (54) of the contact element (18).

10. The pressure switch device according to any one of claims 7 to 9 in combination with claim 3 or 6, **characterised in that** in the actuating region (40) or deformation region (46) travel limiting means are provided for delimiting the deformation of the actuation element (20) in the direction of the printed circuit board (10).

11. The pressure switch device according to claim 10, **characterised in that** the travel limiting means have a support device (56) which projects from the inside (34) of the actuating region (40) or deformation region (46) and can be placed against the printed circuit board (10) in a circumferential manner around the contact element (18).

12. The pressure switch device according to claim 10 or 11, **characterised in that** the travel limiting means are configured in one piece with the remaining actuation element (20).

13. The pressure switch device according to any one of claims 1 to 12, **characterised in that** the securing layer (22) is formed by a film or a film composite.

14. The pressure switch device according to any one of claims 1 to 13, **characterised in that** the bearing plate (12) is formed by acrylic glass.

15. An electronic device having a pressure switch device according to any one of claims 1 to 13, **characterised in that** the bearing plate (12) together with the printed circuit board (10) has at least two receptacles (28) with an elastically deformable actuation element (20) secured therein respectively.

16. A method for producing a pressure switch device according to any one of claims 1 to 14, **characterised in that**
in a first step the bearing plate (12) is secured to the printed circuit board (10) such that the at least one bearing recess (14) exposes the at least contact region (6) of the printed circuit board (10),
in a second step the contact element (18) and the actuation element (20) are inserted into the receptacle (28) formed by the bearing recess (14) of the bearing plate (12) and the printed circuit board (10) and
in a third step the receptacle (28) with the contact element (18) and actuation element (20) inserted therein is closed off at least partially by means of the securing layer (22).

17. The method according to claim 16, **characterised in that** in the first step an adhesive layer (48) is provided between the printed circuit board (10) and bearing plate (12), which adhesive layer extends into the receptacle (28) and the fastening region (42) of the actuation element (20) is secured on the base side to the adhesive layer (48) in the second step.

18. The method according to claim 17, **characterised in that** after the second step between the bearing plate (12) and the securing layer (22) a second adhesive layer (49) is provided which extends into the receptacle (28) and the fastening region (42) of the actuation element (20) is secured on the upper side to the second adhesive layer (49) in the third step.

## Revendications

1. Dispositif d'interrupteur à poussoir (2) pour un appareil électronique (E)
comprenant au moins une zone de contact (6) prévue sur un circuit imprimé (10),
un élément de contact (18) réglable au niveau de la zone de contact (6) entre une position ouverte et une position de contact,
un élément d'actionnement (20) élastiquement déformable, au moyen duquel l'élément de contact (18) peut être déplacé de la position ouverte à la position de contact, et
une plaque de support (12) prévue au niveau du circuit imprimé (10) comprenant au moins un évidement de support (14), qui forme conjointement avec le circuit imprimé (10) un logement (28) pour l'élément de contact (18) et l'élément d'actionnement (20) inséré individuellement, dans lequel le circuit imprimé (10) forme un fond de logement (30) et la plaque de support (12) forme une délimitation latérale (32) du logement (28),
**caractérisé en ce qu'**une couche de protection (22) est prévue sur un côté supérieur (38) de la plaque de support (12) opposée au circuit imprimé (10), qui forme une interface utilisateur (24) et qui ferme le logement (28) au moins partiellement, dans lequel l'élément d'actionnement (20) présente une zone de fixation (42), qui est soutenue par le circuit imprimé (10) et la couche de protection (22) et est fixée par complémentarité de forme entre le circuit imprimé (10) et la couche de protection (22).

2. Dispositif d'interrupteur à poussoir selon la revendication 1, **caractérisé en ce que** l'élément d'actionnement (20) élastiquement déformable est formé par un bouton-poussoir en forme de dôme.

3. Dispositif d'interrupteur à poussoir selon la revendication 1 ou 2, **caractérisé en ce que** l'élément d'actionnement (20) présente une zone d'actionnement (40) centrale, qui fait saillie sur l'interface utilisateur (24).

4. Dispositif d'interrupteur à poussoir selon l'une quelconque des revendications 1 à 3, **caractérisé en ce que** la délimitation latérale (32) du logement (28) est conçue de manière cylindrique.

5. Dispositif d'interrupteur à poussoir selon l'une quelconque des revendications 1 à 4, **caractérisé en ce que** l'élément d'actionnement (20) forme une section de pied (44) circonférentielle servant de zone de fixation (42), qui est soutenue côté fond sur le circuit imprimé (10) et côté supérieur sur la couche de protection (22), ainsi qu'est disposée latéralement de manière adjacente à la délimitation latérale (32) de la plaque de support (12).

6. Dispositif d'interrupteur à poussoir selon au moins les revendications 3 et 5, **caractérisé en ce que** la zone d'actionnement (40) centrale est reliée par l'intermédiaire d'une zone de déformation (46) circonférentielle à la section de pied (44), dans lequel la zone d'actionnement (40), la zone de déformation (46) et la section de pied (44) sont fabriquées d'une seule pièce à partir d'un matériau élastomère homogène.

7. Dispositif d'interrupteur à poussoir selon l'une quelconque des revendications 1 à 6, **caractérisé en ce que** l'élément de contact (18) est formé par un commutateur de contact en forme de dôme pouvant être alimenté au moyen de l'élément d'actionnement (20) avec une force de commande (F).

8. Dispositif d'interrupteur à poussoir selon au moins la revendication 3, **caractérisé en ce que** l'élément d'actionnement (20) est conçu pour être conducteur dans la zone d'actionnement (40) centrale.

9. Dispositif d'interrupteur à poussoir selon les revendications 3 et 7 ou selon la revendication 8, **caractérisé en ce que** l'élément d'actionnement (20) présente un contour de guidage (52) sur un côté intérieur (34) de la zone d'actionnement (40) centrale, qui peut être posé sur le contre-contour de guidage (54) de l'élément de contact (18).

10. Dispositif d'interrupteur à poussoir selon l'une quelconque des revendications 7 à 9 en combinaison avec la revendication 3 ou 6, **caractérisé en ce que** dans la zone d'actionnement (40) ou la zone de déformation (46) des moyens de limitation de course sont prévus pour limiter la déformation de l'élément d'actionnement (20) en direction du circuit imprimé (10).

11. Dispositif d'interrupteur à poussoir selon la revendication 10, **caractérisé en ce que** les moyens de limitation de course présentent un dispositif de support (56) faisant saillie depuis le côté intérieur (34) de la zone d'actionnement (40) ou la zone de déformation (46), qui peut être posé sur le circuit imprimé (10) circonférentiellement autour de l'élément de contact (18).

12. Dispositif d'interrupteur à poussoir selon la revendication 10 ou 11, **caractérisé en ce que** les moyens de limitation de course sont conçus d'une seule pièce avec l'élément d'actionnement (20) restant.

13. Dispositif d'interrupteur à poussoir selon l'une quelconque des revendications 1 à 12, **caractérisé en ce que** la couche de protection (22) est formée par un film ou un film composite.

14. Dispositif d'interrupteur à poussoir selon l'une quelconque des revendications 1 à 13, **caractérisé en ce que** la plaque de support (12) est formée de verre acrylique.

15. Appareil électronique comprenant un dispositif d'interrupteur à poussoir selon l'une quelconque des revendications 1 à 13, **caractérisé en ce que** la plaque de support (12) présente conjointement avec le circuit imprimé (10) au moins deux logements (28) avec respectivement un élément d'actionnement (20) élastiquement déformable fixé dans ceux-ci.

16. Procédé de fabrication d'un dispositif d'interrupteur à poussoir selon l'une quelconque des revendications 1 à 14, **caractérisé en ce que**
lors d'une première étape la plaque de support (12) est fixée au circuit imprimé (10) de telle sorte que l'au moins un évidement de support (14) libère l'au moins une zone de contact (6) du circuit imprimé (10),
lors d'une deuxième étape l'élément de contact (18) et l'élément d'actionnement (20) sont insérés dans le logement (28) formé par l'évidement de support (14) de la plaque de support (12) et le circuit imprimé (10) et
lors d'une troisième étape le logement (28) avec l'élément de contact (18) inséré dans celui-ci et l'élément d'actionnement (20) est fermé au moins partiellement au moyen de la couche de protection (22).

17. Procédé selon la revendication 16, **caractérisé en ce que** lors de la première étape une couche adhésive (48) est prévue entre le circuit imprimé (10) et la plaque de support (12), qui s'étend dans le logement (28) et la zone de fixation (42) de l'élément d'actionnement (20) est fixé côté fond lors de la deuxième étape sur la couche adhésive (48).

18. Procédé selon la revendication 17, **caractérisé en ce qu'**après la deuxième étape une seconde couche adhésive (49) est prévue entre la plaque de support (12) et la couche de protection (22), qui s'étend dans le logement (28) et la zone de fixation (42) de l'élément d'actionnement (20) est fixé côté supérieur lors de la troisième étape à la seconde couche adhésive (49).
